# FASCICULE DE BREVET EUROPEEN

(11) **EP 1 154 714 B1**
(45) Date de publication et mention de la délivrance du brevet: **13.08.2003**
(21) Numéro de dépôt: 00905122.8
(22) Date de dépôt: 11.02.2000
(51) Int. Cl.: A47J 27/21

(54) **BOUILLOIRE ELECTRIQUE A PLAQUE METALLIQUE CHAUFFANTE**
WASSERKOCHER MIT HEIZPLATTE AUS METALL
ELECTRIC KETTLE WITH METAL HEATING PLATE

(30) Priorité: 18.02.1999 FR 9902046
(43) Date de publication de la demande: 21.11.2001
(73) Titulaire: SEB S.A., 69130 Ecully (FR)
(72) Inventeur: BINOT, Jean-Pierre, F-72130 St Ouen De Minbre (FR); GIRAULT, Michel, F-61250 Conde Sur Sarthe (FR); LABELLE, Guy, F-72610 Champfleur (FR)
(74) Mandataire: Kiehl, Hubert
(86) Numéro de dépôt international: FR0000351
(87) Numéro de publication internationale: WO00048494

(56) Documents cités:
- EP-A- 0 807 394
- EP-A- 0 841 030
- DE-A- 19 706 216
- DE-U- 29 610 231

## Description

La présente invention concerne une bouilloire électrique comportant un corps tubulaire comprenant une paroi latérale, des moyens de chauffage comprenant au moins une résistance électrique associée à une plaque métallique chauffante montée de manière étanche dans la partie inférieure du corps et délimitant avec la paroi latérale du corps un réservoir pour du liquide à chauffer, ladite plaque chauffante étant en contact direct, par sa face supérieure, avec le liquide à chauffer, et des moyens de support adaptés à supporter un rebord périphérique de la plaque chauffante.

Une bouilloire électrique ayant les caractéristiques techniques mentionnées ci-dessus est notamment décrite dans le document EP-A-0807394.

Dans une bouilloire électrique connue de ce genre, dite à résistance cachée, le rebord périphérique de la plaque chauffante est supporté par des butées en saillie sur la face interne de la paroi latérale du corps de la bouilloire ; la plaque chauffante est maintenue en place au moyen d'une pièce de serrage conformée en une embase de section transversale en forme de U dont la base constitue le fond du corps de la bouilloire et dont les deux ailes latérales s'emboîtent élastiquement autour de la paroi latérale du corps afin de retenir celle-ci comprimée autour de la plaque chauffante. Cet assemblage de la plaque chauffante présente l'avantage de pouvoir démonter l'embase extérieure du corps de la bouilloire pour accéder facilement à la plaque chauffante en vue de la retirer pour réparation.

En outre, dans une telle bouilloire, la plaque chauffante est associée par sa face inférieure, non seulement à la résistance électrique, mais également à des organes électriques de régulation et de sécurité qui font l'objet d'un câblage électrique lors de la fabrication de la bouilloire ou après réparation de la plaque chauffante, ce câblage ainsi que la réalisation des connexions électriques avec la résistance s'effectuant manuellement après montage de la plaque chauffante dans le corps de la bouilloire.

Dans le cas de la bouilloire connue décrite précédemment, l'opération de câblage électrique tant des organes de régulation et de sécurité de la plaque chauffante que de la résistance de chauffage, est effectuée corps retourné et sans l'embase extérieure pour permettre l'accès à la plaque chauffante. Or, en l'absence de l'embase extérieure, la plaque chauffante risque de ne plus être correctement maintenue en place dans le corps de la bouilloire et donc de prendre une position instable, ce qui rend difficile et fastidieuse l'opération de câblage électrique.

L'invention a notamment pour but de remédier à ces inconvénients et de réaliser une bouilloire électrique, du type exposé ci-dessus, dans laquelle la fixation de la plaque chauffante soit simple à exécuter, fiable, facilement démontable en vue d'une intervention sur la plaque chauffante pour réparation, et permette au cours de la fabrication de la bouilloire ou après réparation de la plaque chauffante une opération aisée de câblage des différents organes électriques associés à la plaque chauffante.

Selon l'invention, les moyens de support comportent une pièce formant jupe qui s'étend verticalement à l'intérieur du corps, entre le rebord périphérique de la plaque et le bord inférieur périphérique du corps, en supportant par son bord supérieur périphérique la face inférieure du rebord périphérique de la plaque chauffante, et qui est fixée sur la face interne de la paroi latérale du corps par des premiers moyens de fixation réversibles, et le corps de la bouilloire comprend un fond constitué par un couvercle de fermeture qui est fixé sur la pièce formant jupe par des deuxièmes moyens de fixation réversibles.

Ainsi, la plaque chauffante est maintenue en place sur la pièce formant jupe intérieure qui vient se fixer sur la face interne de la paroi latérale du corps de la bouilloire et qui est ensuite fermée à sa base par fixation du couvercle formant le fond même du corps de la bouilloire, conduisant ainsi à un montage rapide et fiable de la plaque chauffante au sein de la bouilloire. Par ailleurs, on comprend qu'en cas d'intervention sur la plaque chauffante pour réparation, il suffit d'enlever d'abord le couvercle puis la pièce formant jupe pour accéder et retirer la plaque chauffante, et qu'au cours de la fabrication de la bouilloire ou après réparation de la plaque, le corps étant retourné et le couvercle non monté, la plaque chauffante reste parfaitement maintenue en place dans le corps grâce à la fixation de la pièce formant jupe intérieure sur la face interne de la paroi latérale du corps, facilitant alors le câblage des divers organes électriques associés à la plaque chauffante.

Les caractéristiques et avantages de l'invention ressortiront d'ailleurs de la description qui va suivre, à titre d'exemple non limitatif, en référence aux dessins annexés dans lesquels :
- la figure 1 est une vue partielle en coupe verticale d'une bouilloire selon l'invention ;
- la figure 2 est une vue en perspective, à échelle agrandie, d'une pièce formant jupe de la bouilloire de la figure 1 ; et
- la figure 3 est une vue en perspective, à échelle agrandie, d'une plaque de fermeture de la bouilloire de la figure 1.

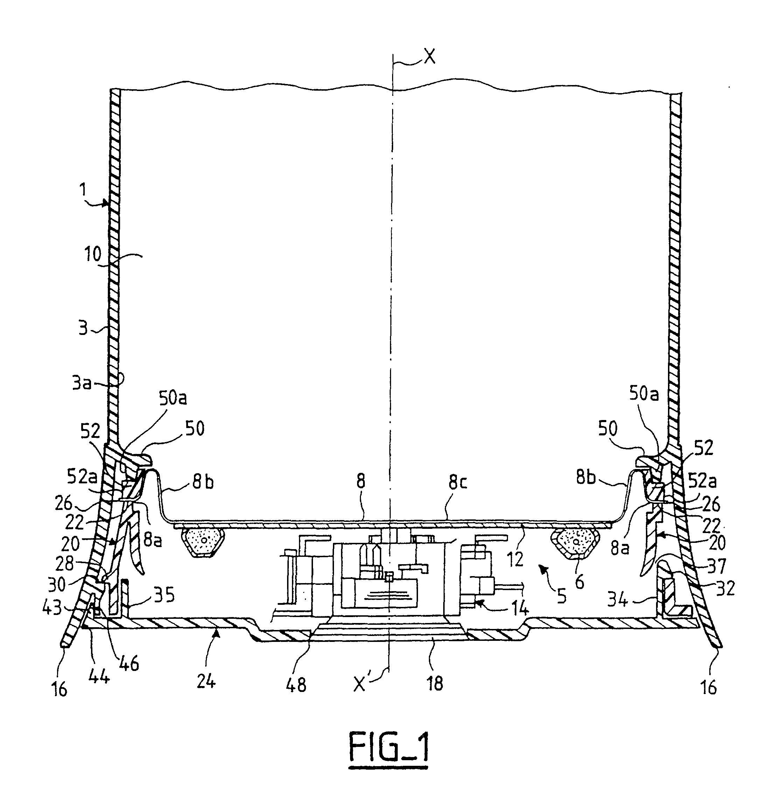

Dans l'exemple de réalisation représenté sur la figure 1, la bouilloire électrique comporte un corps tubulaire 1 en matière plastique, de forme cylindrique légèrement évasée en partie inférieure, comprenant une paroi latérale 3 et présentant un axe vertical de symétrie XX'.

Dans la partie inférieure du corps 1 sont montés des moyens de chauffage électrique, désignés par le repère général 5 sur la figure 1, comprenant au moins une résistance électrique 6 associée à une plaque métallique chauffante 8 montée de manière étanche dans le corps 1. La plaque chauffante 8 délimite avec la paroi latérale 3 du corps 1 un réservoir 10 pour du liquide à chauffer, fermé en partie supérieure par un couvercle (non représenté), et vient en contact direct par sa face supérieure avec le liquide à chauffer.

La résistance électrique 6 est présentement une résistance blindée associée à la plaque métallique chauffante 8 par l'intermédiaire d'une plaque de diffusion thermique 12, mais peut également être réalisée sous la forme d'une résistance sérigraphiée sans sortir pour autant du cadre de l'invention.

Cette résistance électrique 6 est adaptée à produire une puissance de chauffage élevée, de l'ordre de 3000 watts.

La plaque chauffante 8 est également associée à des organes de régulation et de sécurité, repérés en 14 sur la figure 1, qui sont disposés dans l'espace situé entre la plaque chauffante 8 et le bord inférieur périphérique 16 du corps 1 ; ces organes 14 de régulation et de sécurité de la plaque chauffante 8 sont électriquement reliés à un connecteur 18, par exemple du type femelle, axé sur l'axe vertical XX' du corps 1 de la bouilloire, débouchant à la base du corps 1 et destiné à être engagé dans un connecteur mâle prévu dans un socle (non représenté) sur lequel est destiné à venir reposer le corps 1 de la bouilloire.

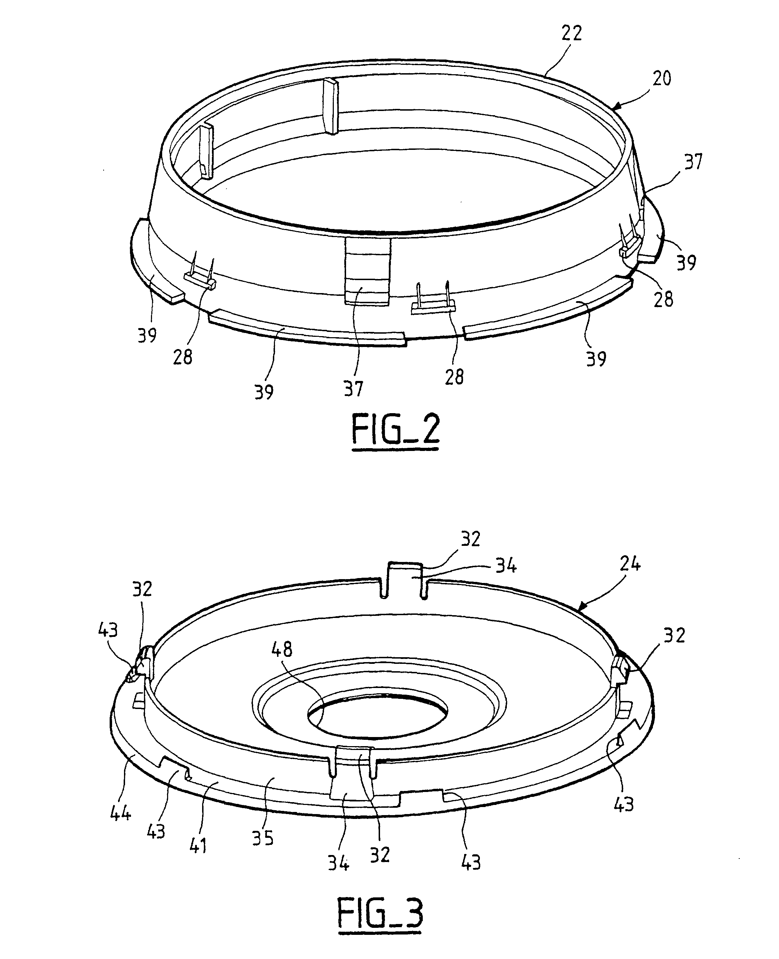

Selon l'invention, une pièce annulaire formant jupe 20 (visible aux figures 1 et 2), en matière plastique, s'étend verticalement à l'intérieur du corps 1, dans l'espace situé entre la plaque chauffante 8 et le bord inférieur périphérique 16 du corps 1, présente un bord supérieur périphérique 22 adapté à supporter un rebord périphérique 8a de la plaque chauffante 8, et est fixée sur la face interne 3a de la paroi latérale 3 du corps par des premiers moyens de fixation réversibles ou démontables, tandis qu'un couvercle ou plaque de fermeture 24 (visible aux figures 1 et 3) en forme de disque, en matière plastique, constitue le fond même du corps 1 de la bouilloire et est fixé sur la pièce formant jupe intérieure 20 par des deuxième moyens de fixation réversibles.

En regard de la figure 1, le rebord périphérique de la plaque chauffante 8 est constitué par une aile horizontale 8a reposant sur le bord supérieur périphérique 22 de la pièce formant jupe intérieure 20, présentant une extrémité libre 26 située à légère distance de la face interne 3a de la paroi latérale 3 du corps 1, et s'étendant à un niveau supérieur à celui de la plaque chauffante 8.

Cette aile 8a est reliée à la plaque 8 par une seconde aile 8b formant présentement un pli de section transversale en forme de U renversé qui est légèrement évasé et dont la base est arrondie.

La plaque 8 est ainsi conformée en une coupelle dont le fond est constitué par la surface supérieure 8c et la paroi latérale est constituée par les deux ailes 8a, 8b, le fond 8c de la coupelle étant situé à un niveau notablement inférieur à celui de l'aile 8a. Cette conformation de la plaque 8 présente l'avantage de réduire considérablement le gradient de température de la plaque au-delà de son fond 8c, empêchant ainsi toute éventuelle déformation du corps plastique 1 de la bouilloire. Le corps 1 peut alors être réalisé en une matière plastique de résistance thermique limitée, telle qu'un polypropylène, et donc à moindre coût.

En se reportant aux figures 1 et 2, les moyens de fixation réversibles prévus pour solidariser la pièce formant jupe intérieure 20 à la face interne 3a de la paroi latérale 3 du corps 1 de la bouilloire, comprennent, dans cet exemple de réalisation, une pluralité d'ergots élastiques 28, mieux visibles à la figure 2, disposés en saillie sur le pourtour externe de la pièce formant jupe 20 et adaptés à s'engager par encliquetage, respectivement, sur une pluralité de crans 30 pratiqués sur la face interne 3a de la paroi latérale 3 du corps 1 de la bouilloire, voir figure 1.

Les ergots 28 et les crans complémentaires 30 sont répartis uniformément dans un plan transversal du corps 1 de la bouilloire.

Le montage de la plaque chauffante 8 est ainsi très simple à réaliser, par un simple encliquetage de la pièce formant jupe 20 sur la face interne de la paroi latérale 3 du corps 1.

Dans cet exemple de réalisation, en regard des figures 1 et 3, les moyens de fixation réversibles prévus pour solidariser le couvercle de fermeture 24 à la pièce formant jupe 20, comprennent, quant à eux, une pluralité de crochets élastiques 32 orientés vers l'extérieur, mieux visibles à la figure 3, qui sont formés aux extrémités supérieures de pattes verticales 34 réalisées à partir d'une cloison annulaire 35 surmontant intérieurement le couvercle 24 (voir figure 3), et qui sont adaptés à être insérés par encliquetage, respectivement, dans une pluralité d'évidements 37 pratiqués dans la pièce formant jupe 20 en étant angulairement décalés par rapport aux ergots 28 qu'elle présente, comme on le voit à la figure 2.

Les crochets 32 et les évidements complémentaires 37 sont eux aussi répartis uniformément dans un plan transversal du corps 1 de la bouilloire, mais sont angulairement décalés par rapport aux ergots 28 et crans complémentaires 30.

De plus, comme le montre la figure 2, la pièce formant jupe 20 comporte, à la base de son pourtour externe, une pluralité de nervures radiales 39 s'étendant chacune circonférentiellement entre deux ergots 28 et adaptées à venir s'appliquer à plat sur une bordure annulaire périphérique 41 (figure 3), extérieure à la cloison 35, du couvercle 24 lors du montage de celui-ci sur la pièce formant jupe 20.

De préférence, comme illustré à la figure 1, le couvercle 24 est également fixé sur la face interne 3a de la paroi latérale 3 du corps 1 par des moyens de fixation réversibles supplémentaires adaptés à contre-verrouiller la pièce formant jupe 20 lors de la mise en place du couvercle 24 afin de renforcer le maintien en place de la plaque chauffante 8 dans le corps 1.

Dans l'exemple de réalisation illustré aux figures 1 et 3, ces moyens de fixation supplémentaires comprennent une pluralité de nervures verticales élastiques 43 légèrement orientées vers l'intérieur, mieux visibles à la figure 3, qui sont formées sur le bord périphérique 44 du couvercle 24 en y étant réparties uniformément et d'une manière angulaire identique à celle des ergots 28 (figure 2) de la pièce formant jupe 20, et qui sont adaptées à être plaquées par action axiale, respectivement, contre une pluralité de pattes descendantes 46 formées chacune à partir du cran complémentaire 30 (figure 1) pratiqué sur la face interne 3a de la paroi latérale 3 du corps 1 et destiné à la fixation de la pièce formant jupe 20.

Le montage du couvercle 24 est ainsi très simple à exécuter, par un simple encliquetage sur la pièce formant jupe 20 et, simultanément, par un engagement à action axiale sur la face interne de la paroi latérale 3 qui est ainsi retenue comprimée autour de la pièce formant jupe 20.

Le couvercle 24, figure 3, est par ailleurs percé d'une ouverture centrale 48 dans laquelle débouche le connecteur 18 (figure 1) lors du montage du couvercle.

Dans l'exemple de réalisation illustré à la figure 1, la surface interne de la paroi latérale 3 du corps 1 comprend une aile 50 s'étendant horizontalement vers l'intérieur du réservoir 10 du liquide à chauffer en étant disposée légèrement au-dessus de l'aile 8b, conformée ici en un pli de section transversale en forme de U renversé, de la plaque chauffante 8, et présentant un bord 50a descendant au droit de l'aile horizontale 8a de la plaque 8.

Un joint d'étanchéité 52, de préférence moulé en une matière plastique souple telle qu'un élastomère du type silicone, est interposé entre le bord 50a de l'aile 50 et l'aile pliée 8b de la plaque 8, et est pourvu d'un rebord périphérique 52a qui est maintenu pincé entre ledit bord 50a et l'aile horizontale 8a de la plaque 8.

Cet assemblage de la plaque chauffante 8 à l'aide de la pièce formant jupe intérieure 20 et du couvercle 24 permet non seulement d'assurer une fixation solide de la plaque chauffante 8 dans le corps 1 de la bouilloire, mais également d'accéder et de retirer facilement la plaque chauffante 8, par un démontage manuel d'abord du couvercle 24, puis de la pièce formant jupe 20, en cas d'intervention sur la plaque pour réparation.

Egalement, le câblage des organes de régulation et de sécurité 14 de la plaque chauffante 8 ainsi que la réalisation des connexions électriques avec la résistance électrique 6, intervenant tant au cours de la fabrication de la bouilloire qu'après une réparation de la plaque chauffante 8 et s'effectuant plaque 8 montée dans le corps 1, corps 1 retourné et couvercle 24 non monté, sont particulièrement facilités dans la mesure où la plaque 8 reste en position parfaitement stable grâce à sa fixation par la pièce formant jupe intérieure 20 elle-même verrouillée sur la face interne de la paroi latérale 3 du corps 1 ; après câblage des divers organes électriques associés à la plaque 8, le corps 1 de la bouilloire est fermé par simple clipsage du couvercle 24.

## Revendications

1. Bouilloire électrique comportant un corps tubulaire
(1) comprenant une paroi latérale (3), des moyens de chauffage (5) comprenant au moins une résistance électrique (6) associée à une plaque métallique chauffante (8) montée de manière étanche dans la partie inférieure du corps (1) et délimitant avec la paroi latérale (3) du corps un réservoir (10) pour du liquide à chauffer, ladite plaque chauffante (8) étant en contact direct, par sa face supérieure, avec le liquide à chauffer, et des moyens de support (20) adaptés à supporter un rebord périphérique (8a) de la plaque chauffante (8),
**caractérisée en ce que** les moyens de support comportent une pièce formant jupe (20) qui s'étend verticalement à l'intérieur du corps (1), entre le rebord périphérique (8a) de la plaque (8) et le bord inférieur périphérique (16) du corps (1), en supportant par son bord supérieur périphérique (22) la face inférieure du rebord périphérique (8a) de la plaque chauffante (8), et qui est fixée sur la face interne (3a) de la paroi latérale (3) du corps par des premiers moyens de fixation réversibles (28, 30), et **en ce que** le corps (1) de la bouilloire comprend un fond constitué par un couvercle de fermeture (24) qui est fixé sur la pièce formant jupe (20) par des deuxièmes moyens de fixation réversibles (32, 37).

2. Bouilloire électrique selon la revendication 1,
**caractérisée en ce que** les premiers moyens de fixation comprennent une pluralité d'ergots élastiques (28) disposés en saillie sur le pourtour externe de la pièce formant jupe (20) et adaptés à s'engager par encliquetage, respectivement, sur une pluralité de crans (30) pratiqués sur la face interne (3a) de la paroi latérale (3) du corps (1), tandis que les deuxièmes moyens de fixation comprennent une pluralité de crochets élastiques (32) qui sont formés aux extrémités supérieures de pattes verticales (34) disposées sur le couvercle de fermeture (24) et qui sont adaptés à être insérés par encliquetage, respectivement, dans une pluralité d'évidements (37) pratiqués dans la pièce formant jupe (20).

3. Bouilloire électrique selon la revendication 1 ou 2, **caractérisée en ce que** le couvercle de fermeture (24) est également fixé sur la face interne (3a) de la paroi latérale (3) du corps (1) par des troisièmes moyens de fixation réversibles (43, 46) adaptés à contre-verrouiller la pièce formant jupe (20).

4. Bouilloire électrique selon les revendications 2 et 3, **caractérisée en ce que** les troisièmes moyens de fixation comprennent une pluralité de nervures verticales (43) formées sur le bord périphérique (44) du couvercle de fermeture (24) et adaptées à être plaquées, respectivement, contre une pluralité de pattes descendantes (46) formées chacune à partir du cran correspondant (30) de fixation de la pièce formant jupe (20) qui est pratiqué sur la face interne (3a) de la paroi latérale (3) du corps.

5. Bouilloire électrique selon l'une quelconque des revendications précédentes,
**caractérisée en ce que** le rebord périphérique de la plaque chauffante (8) est constitué par une aile horizontale (8a) qui est reliée à la plaque (8) par une autre aile formant un pli (8b), ladite aile horizontale (8a) s'étendant à un niveau supérieur à celui de la plaque (8) et reposant sur le bord supérieur périphérique (22) de la pièce formant jupe (20).

6. Bouilloire électrique selon la revendication 5, **caractérisée en ce que** le pli (8b) présente en section transversale une forme de U renversé qui est légèrement évasé et dont la base est arrondie.

7. Bouilloire électrique selon la revendication 5 ou 6, **caractérisée en ce que** la paroi latérale (3) du corps (1) comprend une aile (50) qui s'étend horizontalement vers l'intérieur du réservoir (10) en étant disposée légèrement au-dessus du pli (8b) de la plaque chauffante (8), et qui présente un bord (50a) descendant au droit de l'aile horizontale (8a) de la plaque (8), un joint d'étanchéité (52) étant disposé entre ledit bord (50a) et le pli (8b) de la plaque et présentant un rebord périphérique (52a) qui est pincé entre ledit bord (50a) et l'aile horizontale (8a) de la plaque (8).

8. Bouilloire électrique selon la revendication 7, **caractérisée en ce que** le joint d'étanchéité (52) est moulé en une matière plastique souple, telle qu'un élastomère du type silicone.

9. Bouilloire électrique selon l'une quelconque des revendications précédentes,
**caractérisée en ce que** la résistance électrique (6) est adaptée à produire une puissance de chauffage élevée, de l'ordre de 3000 watts.

10. Bouilloire électrique selon l'une quelconque des revendications précédentes,
**caractérisée en ce que** le corps (1) est réalisé en une matière plastique de résistance thermique limitée.

## Patentansprüche

1. Elektrischer Wasserkocher mit einem rohrförmigen Körper (1) mit einer Seitenwand (3), einer Heizvorrichtung (5) mit mindestens einem elektrischen Widerstand (6), der zu einer Heizplatte (8) aus Metall gehört, die dicht im unteren Teil des Körpers (1) montiert ist und mit der Seitenwand (3) des Körpers ein Gefäß (10) für die zu erwärmende Flüssigkeit begrenzt, wobei die Heizplatte (8) durch ihre Oberseite in direkter Berührung mit der zu erwärmenden Flüssigkeit ist, und mit einer Haltevorrichtung (20)zum Stützen eines Umfangsrandes (8a) der Heizplatte (8), **dadurch gekennzeichnet, daß** die Haltevorrichtung ein eine Schürze bildendes Teil (20) aufweist, das sich vertikal im Inneren des Körpers (1) zwischen der Umfangsrandleiste (8a) der Platte (8) und dem inneren Umfangsrand (16) des Körpers (1) erstreckt und mit seinem oberen Umfangsrand (22) die Unterseite der Umfangsrandleiste (8a) der Heizplatte (8) trägt und an der Innenseite (3a) der Seitenwand des Körpers durch erste reversible Befestigungsmittel (28, 30) befestigt ist, und daß der Körper (1) des Wasserkochers einen Boden aufweist, der von einem Verschlußdeckel (24) gebildet ist, der an dem eine Schürze bildenden Teil (20) durch zweite reversible Befestigungsmittel (32, 37) befestigt ist.

2. Elektrischer Wasserkocher nach Anspruch 1, **dadurch gekennzeichnet, daß** die ersten Befestigungsmittel eine Mehrzahl von elastischen Zapfen (28) umfassen, die am äußeren Umfang des eine Schürze bildenden Teils (20) vorspringend angeordnet und dafür eingerichtet sind, jeweils auf einer Mehrzahl von Rasten (30) einzurasten, die an der Innenseite (3a) der Seitenwand (3) des Körpers (1) ausgebildet sind, während die zweiten Befestigungsmittel eine Mehrzahl von elastischen Haken (32) umfassen, die an den oberen Enden von vertikalen Lappen (34) ausgebildet sind, die am Verschlußdeckel (24) angeordnet und dafür vorgesehen sind, jeweils in eine Mehrzahl von Ausnehmungen (37) einzugreifen und dort einzurasten, die in dem eine Schürze bildenden Teil (20) ausgebildet sind.

3. Elektrischer Wasserkocher nach Anspruch 1 oder 2, **dadurch gekennzeichnet, daß** der Verschlußdeckel (24) auch an der Innenseite (3a) der Seitenwand (3) des Körpers (1) durch dritte reversible Befestigungsmittel (43,46) befestigt ist, die zur Gegenverriegelung des Schürzenteils (20) eingerichtet sind.

4. Elektrischer Wasserkocher nach den Ansprüchen 2 und 3, **dadurch gekennzeichnet, daß** die dritten Befestigungsmittel eine Mehrzahl von vertikalen Rippen (43) umfassen, die am Umfangsrand (44) des Verschlußdeckels (24) gebildet und dafür eingerichtet sind, daß sie jeweils gegen eine Mehrzahl von herabreichenden Lappen (46) drücken, die jeder ausgehend von der entsprechenden Raste (30) der Befestigung des Schürzenteils (20) gebildet sind, die an der Innenseite (3a) der Seitenwand (3) des Körpers ausgebildet ist.

5. Elektrischer Wasserkocher nach einem der vorangehenden Ansprüche, **dadurch gekennzeichnet, daß** die Umfangsrandleiste der Heizplatte (8) aus einem horizontalen Flügel (8a) besteht, der mit der Platte (8) durch einen anderen Flügel (8b) verbunden ist, der eine Falte bildet, wobei der horizontale Flügel (8a) sich auf einer Höhe über der der Platte (8) erstreckt und auf dem oberen Umfangsrand (22) des Schürzenteils (20) ruht.

6. Elektrischer Wasserkocher nach Anspruch 5, **dadurch gekennzeichnet, daß** die Falte (8b) einen Querschnitt in Form eines umgekehrten U aufweist, das leicht aufgeweitet ist und dessen Basis abgerundet ist.

7. Elektrischer Wasserkocher nach Anspruch 5 oder 6, **dadurch gekennzeichnet, daß** die Seitenwand (3) des Körpers (1) einen Flügel (50) aufweist, der sich horizontal zum Inneren des Gefäßes (10) erstreckt, wobei er etwas oberhalb der Falte (8b) der Heizplatte (8) angeordnet ist und einen nach unten im Bereich des waagerechten Flügels (8a) der Heizplatte (8) herabreichenden Rand (50a) aufweist, wobei ein Dichtungsring (52) zwischen dem Rand (50a) und der Falte (8b) der Platte angeordnet ist und eine Umfangsrandleiste (52a) aufweist, die zwischen dem Rand (50a) und dem waagerechten Flügel (8a) der Platte (8) eingeklemmt ist.

8. Elektrischer Wasserkocher nach Anspruch 7, **dadurch gekennzeichnet, daß** der Dichtungsring (52) aus einem nachgiebigen Kunststoffmaterial, wie einem Elastomer vom Typ Silikon, geformt ist.

9. Elektrischer Wasserkocher nach einem der vorangehenden Ansprüche, **dadurch gekennzeichnet, daß** der elektrische Widerstand (6) zur Erzeugung einer hohen Heizleistung in der Größenordnung von 3000 Watt eingerichtet ist.

10. Elektrischer Wasserkocher nach einem der vorangehenden Ansprüche, **dadurch gekennzeichnet, daß** der Körper (1) aus einem Kunststoffmaterial von begrenzter Wärmefestigkeit hergestellt ist.

## Claims

1. Electric kettle having a tubular body (1) comprising a side wall (3), heating means (5) comprising at least one electric element (6) associated with a metallic heating plate (8) mounted sealingly in the bottom part of the body (1) and delimiting with the side wall (3) of the body a reservoir (10) for liquid to be heated, the said heating plate (8) being in direct contact, through its top face, with the liquid to be heated, and support means (20) adapted to support a peripheral rim (8a) of the heating plate (8), **characterised in that** the support means comprise a piece forming a skirt (20) which extends vertically inside the body (1), between the peripheral rim (8a) of the plate (8) and the peripheral bottom edge (16) of the body (1), supporting through its top peripheral edge (22) the bottom face of the peripheral rim (8a) of the heating plate (8), and which is fixed to the internal face (3a) of the side wall (3) of the body by first reversible fixing means (28, 30), and **in that** the body (1) of the kettle comprises a bottom consisting of a closure cover (24) which is fixed to the piece forming a skirt (20) by second reversible fixing means (32, 37).

2. Electric kettle according to Claim 1, **characterised in that** the first fixing means comprise a plurality of elastic lugs (28) disposed projecting on the external periphery of the piece forming a skirt (20) and adapted to engage by snapping, respectively, on a plurality of notches (30) formed on the internal face (3a) of the side wall (3) of the body (1), whilst the second fixing means comprise a plurality of elastic hooks (32) which are formed at the top ends of vertical tabs (34) disposed on the closure cover (24) and which are adapted to be inserted by snapping, respectively, in a plurality of recesses (37) formed in the piece forming a skirt (20).

3. Electric kettle according to Claim 1 or 2, **characterised in that** the closure cover (24) is also fixed to the internal face (3a) of the side wall (3) of the body (1) by third reversible fixing means (43, 46) adapted to counter-lock the piece forming a skirt (20).

4. Electric kettle according to Claims 2 and 3, **characterised in that** the third fixing means comprise a plurality of vertical ribs (43) formed on the peripheral edge (44) of the closure cover (24) and adapted to be pressed respectively against a plurality of descending lugs (46) each formed from the corresponding notch (30) for fixing the piece forming a skirt (20) which is formed on the internal face (3a) of the side wall (3) of the body.

5. Electric kettle according to any one of the preceding claims, **characterised in that** the peripheral rim of the heating plate (8) consists of a horizontal flange (8a) which is connected to the plate (8) by another flange forming a fold (8b), the said horizontal flange (8a) extending at a level higher than that of the plate (8) and resting on the top peripheral edge (22) of the piece forming a skirt (20).

6. Electric kettle according to Claim 5, **characterised in that** the fold (8b) has a transverse section in the form of an inverted U which is slightly splayed and whose base is rounded.

7. Electric kettle according to Claim 5 or 6, **characterised in that** the side wall (3) of the body (1) comprises a flange (50) which extends horizontally towards the inside of the reservoir (10) whilst being disposed slightly above the fold (8b) of the heating plate (8), and which has an edge (50a) descending in line with the horizontal flange (8a) of the plate (8), a sealing joint (52) being disposed between the said edge (50a) and the fold (8b) of the plate and having a peripheral rim (52a) which is gripped between the said edge (50a) and the horizontal flange (8a) of the plate (8).

8. Electric kettle according to Claim 7, **characterised in that** the sealing joint (52) is moulded from a flexible plastics material, such as an elastomer of the silicone type.

9. Electric kettle according to any one of the preceding claims, **characterised in that** the electric element (6) is able to produce a high heating power, around 3000 watts.

10. Electric kettle according to any one of the preceding claims, **characterised in that** the body (1) is produced from a plastics material with limited heat resistance.
